# EUROPÄISCHE PATENTSCHRIFT

(11) **EP 4 334 609 B1**
(45) Veröffentlichungstag und Bekanntmachung des Hinweises auf die Patenterteilung: **23.04.2025**
(21) Anmeldenummer: 22715005.9
(22) Anmeldetag: 14.03.2022
(51) Int. Cl.: F16J 9/20, F16J 9/14

(54) **KOLBENRING MIT VARIABLER DRUCKENTLASTUNG**
PISTON RING WITH VARIABLE PRESSURE RELIEF
SEGMENT DE PISTON À ABSORPTION DE PRESSION VARIABLE

(30) Priorität: 04.05.2021 DE 102021111437
(43) Veröffentlichungstag der Anmeldung: 13.03.2024
(73) Patentinhaber: Federal-Mogul Burscheid GmbH, 51399 Burscheid (DE)
(72) Erfinder: KARABEL, Döndü, 51399 Burscheid (DE); PRÖPPER, Jörn, 51375 Leverkusen (DE)
(74) Vertreter: Kurig, Thomas
(86) Internationale Anmeldenummer: PCT/EP2022/056502
(87) Internationale Veröffentlichungsnummer: WO 2022/233481

(56) Entgegenhaltungen:
- EP-A1- 2 206 909
- EP-A1- 3 546 805
- EP-B1- 3 421 846
- JP-U- H0 254 351

## Beschreibung

### Gebiet der Erfindung

Die vorliegende Erfindung betrifft einen Kolbenring, der eine variable Druckentlastung zur Verfügung stellt. Grundlage ist eine auf der Ringaußenseite gebildete DruckentlastungsSchräge.

### Stand der Technik

Radialdrücke von Kolbenringen, die zwischen den Laufflächen von Zylinder und Ring wirken und die durch den Verbrennungsdruck verstärkt werden, wirken nicht gleichmäßig über den Umfang des Dichtsystems. Radialdrücke sind aufgrund der Wärmeausdehnungsunterschiede zwischen Ringinnenfläche und Ringaußenfläche am Ringstoß höher, wodurch in diesem Bereich eine höhere Flächenpressung erzeugt wird und verringerte Ölfilmdicken bewirkt werden. Hinzu kommt, dass in Ringstoßnähe aufgrund der Unterbrechung der Lauffläche die Öldrücke auf Umgebungsniveau fallen und es zu einem umfänglichen Schmierölfluss in die Ringstoßausnehmung kommt. Dies führt zu weiteren Ölfilmreduzierungen, schließlich zu erheblichem Festkörperkontakt bzw. Reibung und daraus resultierend erhöhtem Verschleiß, Fressen und Bewehrungsschicht-Zerrüttung mit Riss- und Pflastersteinbildungen an der Lauffläche, v.a. in den Stoßbereichen des Kolbenrings.

Bekannte Abhilfemaßnahmen sind bevorzugt bei Kolbenringen mit größeren axialen Höhen angeschliffene Fasen an der Lauffläche oberhalb des Pivot-Punktes. Diese dienen als Gasdruckangriffsfläche und erzeugen eine Kraftkomponente in Richtung des Kolbennutinnenbereichs. Diese Kraftkomponente wirkt demnach dem Gasdruck am Innendurchmesser des Rings radial entgegen und entlastet so den tragenden Bereich des Laufprofils, um tribologische Schäden an den zumeist vorhandenen Bewehrungsschichten vor allem an Ringen der ersten Kolbenringnut, die dem Verbrennungsdruck direkt ausgesetzt sind, zu vermeiden. Diese bekannten Druckentlastungen sind jedoch über dem gesamten Umfang gleich angebracht und haben damit den Effekt, gleichmäßig gegen den Radialdruck des Ringes auf die Zylinderwand zu wirken.

Derartige Kolbenringe sind in der Veröffentlichungsschrift des Europäischen Patents mit der Nummer EP3421846 B1 beschrieben, wobei in diesem Dokument eine Kontaktfläche beschrieben ist, die sich an einem Ringstoß verbreitert.

Aus dem japanischen Gebrauchsmuster JP S56-15437 (U) ist weiterhin ein Klobenring bekannt dessen Dicke in Radialrichtung sich in Umfangsrichtung ändert. #

Aus der Japanischen Patentanmeldung JP 2011-169388 (A) ist ein Kolbenring mit verbesserten Ölabstreif-Eigenschaften bekannt.

Die Aufgabe der vorliegenden Erfindung ist es, die umfängliche Variabilität der Radialdrücke zu berücksichtigen.

### Zusammenfassung der Erfindung

Die Erfindung betrifft einen Kolbenring mit den Merkmalen des Anspruchs 1, wobei bevorzugte Ausführungsformen durch die abhängigen Ansprüche bereitgestellt werden.

Ein Kolbenring, umfasst gemäß einem Aspekt eine Ringaußenseite, eine obere Ringflanke und eine untere Ringflanke, wobei die Ringaußenseite an einer Oberkante eine Druckentlastungsschräge aufweist, sodass nur ein unterer Teil der Ringaußenseite eine Kontaktfläche bildet, dadurch gekennzeichnet, dass eine axiale Abmessung der Kontaktfläche in Umfangsrichtung variiert.

Der Vorteil des erfindungsgemäßen Kolbenrings ist, dass eine gezielt definierte axiale Abmessung der Kontaktfläche über den Umfang des Rings die umfänglich unterschiedlichen Radialdrücke bzw. effektiven Radialdrücke kompensiert. Dies geschieht durch die einhergehende Veränderung der Höhe der Gasangriffsfläche an der Lauffläche, die in der Richtung dem Gasdruck am Ringinnendurchmesser entgegengewirkt.

Es ist bevorzugt, dass die axiale Abmessung der Kontaktfläche einen radial äußersten Punkt bzw. Pivotpunkt der Kontaktfläche einschließt.

Es ist bevorzugt, dass sich die axiale Abmessung der Kontaktfläche bis zu dem radial äußersten Punkt der Lauffläche erstreckt.

Es ist bevorzugt, dass eine axiale Lage des radial äußersten Punkts der Kontaktfläche in Umfangsrichtung variiert.

Es ist bevorzugt, dass ein axialer Abstand zwischen der Oberkante und der Kontaktfläche im Bereich des Stoßes maximal ist und sich in gleichmäßigem Verlauf über dem Umfang auf einen Minimalwert, der im Bereich von 2,5 % bis 30 %, bevorzugt von 5 % bis 15 % einer Kolbenringhöhe liegt, verjüngt.

Es ist bevorzugt, dass die axiale Abmessung der Kontaktfläche in einem Bereich, der sich über 5 % bis 35 %, bevorzugt 10 % bis 30 %, besonders bevorzugt 10 % bis 25 % des Gesamtumfangs des Kolbenrings auf beiden Seiten des Ringstoßes erstreckt, ein Minimum aufweist.

Es ist bevorzugt, dass die axiale Abmessung der Kontaktfläche in Umfangsrichtung von dem Minimum zu dem Ringstoß und in entgegengesetzte Richtung zunimmt.

Gemäß der Erfindung, weist die axiale Abmessung der Kontaktfläche an dem Ringstoß ein Minimum auf.

Es ist bevorzugt, dass die axiale Abmessung der Kontaktfläche ausgehend von dem Ringstoß in Umfangsrichtung zunimmt.

Es ist bevorzugt, dass die axiale Abmessung der Kontaktfläche über den Bereich, der sich über 5 % bis 35 %, bevorzugt 10 % bis 30 %, besonders bevorzugt 10 % bis 25 % des Gesamtumfangs des Kolbenrings auf beiden Seiten des Ringstoßes erstreckt, auf beiden Seiten des Ringstoßes konstant ist.

Es ist bevorzugt, dass die axiale Abmessung der Kontaktfläche über den Bereich, der sich über 5 % bis 35 %, bevorzugt 10 % bis 30 %, besonders bevorzugt 10 % bis 25 % des Gesamtumfangs des Kolbenrings erstreckt, auf beiden Seiten des Ringstoßes erst konstant ist und dann zunimmt.

Es ist bevorzugt, dass die axiale Abmessung der Kontaktfläche in wenigstens einem Bereich in Umfangsrichtung konstant ist.

Gemäß der Erfindung, beträgt die axiale Abmessung der Kontaktfläche in Teilbereichen des Umfangs zwischen 60 % und 100 % der Kolbenringhöhe.

Es ist bevorzugt, dass die axiale Abmessung der Kontaktfläche in einem dem Ringstoß gegenüberliegenden Bereich 60 % der Kolbenringhöhe beträgt.

Es ist bevorzugt, dass ein Winkel zwischen der Druckentlastungsschräge und der Oberkante im Bereich von 93° bis 160°, bevorzugt im Bereich von 100° bis 150°, besonders bevorzugt im Bereich von 105° bis 140° liegt.

### Kurze Beschreibung der Zeichnungen

Im Folgenden werden beispielhafte Ausführungsformen der Erfindung unter Bezug auf die Figuren genauer beschrieben, wobei
Fig. 1 einen Querschnitt des erfindungsgemäßen Kolbenrings und
Fig. 2 eine Draufsicht auf die Ringaußenseite im Stoßbereich des erfindungsgemäßen Kolbenrings
zeigt.

### Ausführliche Beschreibung der Zeichnungen

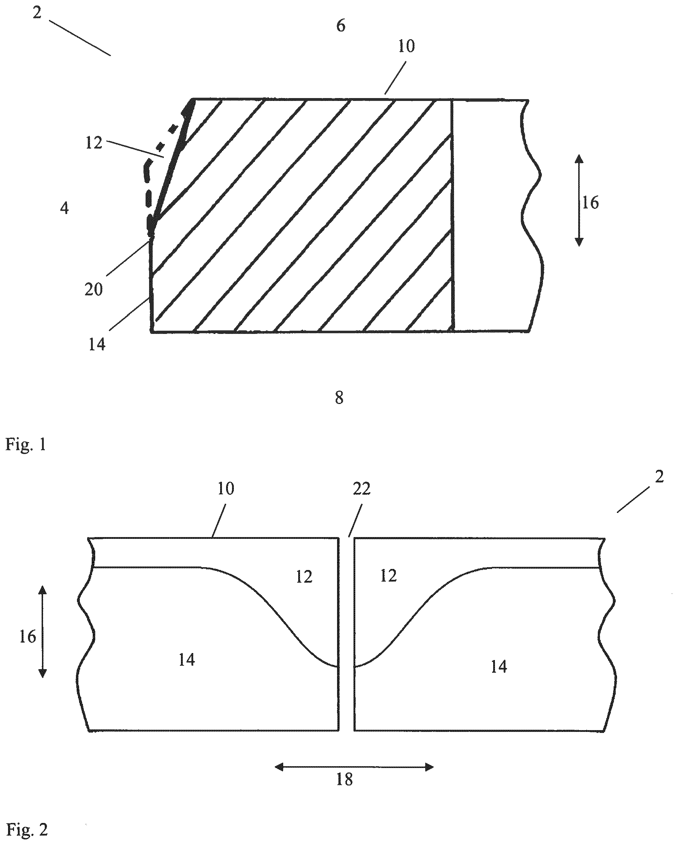

Fig. 1 zeigt einen Querschnitt eines Kolbenrings 2 mit einer Ringaußenseite 4, einer einem Brennraum zugewandten oberen Ringflanke 6 und einer einem Brennraum abgewandten unteren Ringflanke 8. An der Ringaußenseite 4 ist eine Druckentlastungsschräge 12 zu sehen, die eine axiale Abmessung in axialer Richtung 16 aufweist, die beginnend von einer Oberkante 10 bis etwa 35 % bis 45 % der axialen Kolbenringhöhe reicht. Eine radiale Abmessung der Druckentlastungsschräge 12 beträgt etwa 10 % bis 15 % der radialen Abmessung der Kolbenringschnittfläche. Dabei bildet eine geradlinige Verbindung des Endes der Kontaktfläche 14, das der Oberkante 10 am nächsten liegt, mit einem in Radialrichtung nach Innen versetzten Punkt an der Oberkante 10 die Druckentlastungsschräge 12. Durch diese können Brenngase von außen gegen den Kolbenring 2 drücken und so eine Kraft ausüben, die einer Kraft entgegenwirkt, die von Brenngasen erzeugt wird, die auf eine Kolbenringinnenseite wirken. Im unteren Bereich der Ringaußenseite 4 befindet sich eine Kontaktfläche 14 bzw. Lauffläche mit einem radial äußersten Punkt 20.

Die Druckentlastungsschräge wird durch einen Winkel zwischen der Druckentlastungsschräge 12 und der Oberkante 10 definiert. Der minimale Winkel, der sich bevorzugt am Ringstoß 12 befindet, beträgt etwa 93 ° bis 110°. Der maximale Winkel beträgt etwa 135° bis 140 °, wobei dieser in Fig. 1 zwischen der gestrichelten Linie, die die Variation der Druckentlastungsschräge 12 in Umfangsrichtung 18 anzeigt, und der Oberkante 10 liegt.

Fig. 2 zeigt eine Draufsicht auf die Ringaußenseite des Kolbenrings 2 im Bereich des Ringstoßes 22. Die Druckentlastungsschräge 12 ist wie in Fig. 1 dem Brennraum zugewandt und die Kontaktfläche 14 dem Brennraum abgewandt. Dabei variiert eine axiale Abmessung der Druckentlastungsschräge 12 bzw. Kontaktfläche 14 in Umfangsrichtung 18.

Die axiale Abmessung in axialer Richtung 16 der Kontaktfläche 14 weist am Ringstoß 22 ein Minimum auf und beträgt etwa 55 % bis 65 % der axialen Kolbenringhöhe. Im Bereich des Ringstoßes 22 ist die axiale Abmessung der Kontaktfläche 14 bevorzugt minimal, da dort aufgrund der Unterbrechung der Kontaktfläche 14 der Öldruckabfall am gravierendsten auftritt. In Umfangsrichtung 18 erweitert sich die axiale Abmessung der Kontaktfläche 14 dann stetig bis diese etwa 80 % bis 85 % der axialen Kolbenringhöhe beträgt, wobei die Übergänge verrundet sind. Im weiteren sichtbaren umfänglichen Verlauf ist die axiale Abmessung der Kontaktfläche 14 konstant. Die Ausführung der Druckentlastungsschräge 12 bzw. Kontaktfläche 14 ist dabei zum Ringstoß 22 symmetrisch.

### Bezugszeichenliste

- 2: Kolbenring
- 4: Ringaußenseite
- 6: obere Ringflanke
- 8: untere Ringflanke
- 10: Oberkante
- 12: Druckentlastungsschräge
- 14: Kontaktfläche
- 16: axiale Richtung
- 18: Umfangsrichtung
- 20: radial äußerster Punkt bzw. Pivotpunkt
- 22: Ringstoß

## Patentansprüche

1. Kolbenring (2), umfassend
eine Ringaußenseite (4),
eine obere Ringflanke (6) und
eine untere Ringflanke (8),
wobei die Ringaußenseite (4) an einer Oberkante (10) eine Druckentlastungsschräge (12) aufweist, sodass nur ein unterer Teil der Ringaußenseite eine Kontaktfläche (14) aufweist, die eine Lauffläche bildet,
wobei eine axiale Abmessung der Kontaktfläche (14) in Umfangsrichtung (18) variiert,
wobei die axiale Abmessung der Kontaktfläche (14) an einem Ringstoß (22) ein Minimum aufweist,
**dadurch gekennzeichnet, dass**
ein axialer Abstand zwischen der Oberkante (10) und der Kontaktfläche (14) im Bereich des Stoßes maximal ist und sich in gleichmäßigem Verlauf über den Umfang (18) auf einen Minimalwert verjüngt, der im Bereich von 2,5 % bis 40 % einer Kolbenringhöhe liegt, und
dass die axiale Abmessung der Kontaktfläche (14) in Teilbereichen des Umfangs mehr als 60 % und weniger als 100 % der Kolbenringhöhe beträgt.

2. Kolbenring (2) nach Anspruch 1,
wobei die axiale Abmessung der Kontaktfläche (14) einen radial äußersten Punkt (20) der Lauffläche einschließt.

3. Kolbenring (2) nach Anspruch 1,
wobei sich die axiale Abmessung der Kontaktfläche (14) bis zu dem radial äußersten Punkt (20) der Lauffläche erstreckt.

4. Kolbenring (2) nach einem der vorhergehenden Ansprüche,
wobei eine axiale Lage des radial äußersten Punkts (20) der Kontaktfläche (14) in Umfangsrichtung (18) variiert.

5. Kolbenring (2) nach einem der vorhergehenden Ansprüche,
wobei ein axialer Abstand zwischen der Oberkante (10) und der Kontaktfläche (14) im Bereich des Stoßes maximal ist und sich in gleichmäßigem Verlauf über dem Umfang (18) auf einen Minimalwert, der im Bereich von von 2,5 % bis 30 %, bevorzugt von 5 % bis 15 % einer Kolbenringhöhe liegt, verjüngt.

6. Kolbenring (2) nach einem der vorhergehenden Ansprüche,
wobei die axiale Abmessung der Kontaktfläche (14) in einem Bereich, der sich über 5 % bis 35 %, bevorzugt 10 % bis 30 %, besonders bevorzugt 10 % bis 25 % des Gesamtumfangs des Kolbenrings auf beiden Seiten des Ringstoßes (22) erstreckt, das Minimum aufweist.

7. Kolbenring (2) nach Anspruch 6,
wobei die axiale Abmessung der Kontaktfläche (14) in Umfangsrichtung (18) von dem Minimum zu dem Ringstoß (22) **und** in entgegengesetzter Richtung zunimmt.

8. Kolbenring (2) nach Anspruch 1,
wobei die axiale Abmessung der Kontaktfläche (14) ausgehend von dem Ringstoß (22) in Umfangsrichtung (18) zunimmt.

9. Kolbenring (2) nach einem der Ansprüche 1 bis 5,
wobei die axiale Abmessung der Kontaktfläche (14) über den Bereich, der sich über 5 % bis 35 %, bevorzugt 10 % bis 30 %, besonders bevorzugt 10 % bis 25 % des Gesamtumfangs des Kolbenrings auf beiden Seiten des Ringstoßes (22) erstreckt, auf beiden Seiten des Ringstoßes (22) konstant ist.

10. Kolbenring (2) nach einem der Ansprüche 1 bis 5,
wobei die axiale Abmessung der Kontaktfläche (14) über den Bereich, der sich über 5 % bis 35 %, bevorzugt 10 % bis 30 %, besonders bevorzugt 10 % bis 25 % des Gesamtumfangs des Kolbenrings erstreckt, auf beiden Seiten des Ringstoßes (22) erst konstant ist und dann zunimmt.

11. Kolbenring (2) nach einem der vorhergehenden Ansprüche,
wobei die axiale Abmessung der Kontaktfläche (14) in wenigstens einem Bereich in Umfangsrichtung (18) konstant ist.

12. Kolbenring (2) nach einem der vorhergehenden Ansprüche,
wobei ein Winkel zwischen der Druckentlastungsschräge (12) und der Oberkante (10) im Bereich von 93° bis 160 °, bevorzugt im Bereich von 100 ° bis 150°, besonders bevorzugt im Bereich von 105° bis 140° liegt.

## Claims

1. A piston ring (2), comprising:
a ring outer side (4),
an upper ring flank (6) and
a lower ring flank (8),
wherein the ring outer side (4) has a pressure relief chamfer (12) at an upper edge (10), so that only a lower part of the ring outer side has a contact surface (14), which forms a running surface,
wherein an axial dimension of the contact surface (14) varies in a circumferential direction (18),
wherein the axial dimension of the contact surface (14) has a minimum at a ring end gap (22),
**characterized in that**
an axial distance between the upper edge (10) and the contact surface (14) is maximum in the region of the end gap and tapers at an even progression over the circumference (18) to a minimum value, which lies in the range from 2.5 % to 40 % of a piston ring height, and
that the axial dimension of the contact surface (14) in subregions of the circumference is more than 60 % and less than 100 % of the piston ring height.

2. The piston ring (2) according to claim 1,
wherein the axial dimension of the contact surface (14) includes a radially outermost point (20) of the running surface.

3. The piston ring (2) according to claim 1,
wherein the axial dimension of the contact surface (14) extends to the radially outermost point (20) of the running surface.

4. The piston ring (2) according to one of the preceding claims,
wherein an axial position of the radially outermost point (20) of the contact surface (14) varies in the circumferential direction (18).

5. The piston ring (2) according to one of the preceding claims,
wherein an axial distance between the upper edge (10) and the contact surface (14) is maximum in the region of the end gap and tapers at an even progression over the circumference (18) to a minimum value, which lies in the range from 2.5 % to 30 %, preferably from 5 % to 15 % of a piston ring height.

6. The piston ring (2) according to one of the preceding claims,
wherein the axial dimension of the contact surface (14) has the minimum in a region which extends over 5 % to 35 %, preferably 10 % to 30 %, more preferably 10 % to 25 % of the total circumference of the piston ring on both sides of the ring end gap (22).

7. The piston ring (2) according to claim 6,
wherein the axial dimension of the contact surface (14) increases in circumferential direction (18) from the minimum to the ring end gap (22) and in opposite direction.

8. The piston ring (2) according to claim 1,
wherein the axial dimension of the contact surface (14) increases in circumferential direction (18) starting at the ring end gap (22).

9. The piston ring according to one of claims 1 to 5,
wherein the axial dimension of the contact surface (14) is constant over the region, which extends over 5 % to 35 %, preferably 10 % to 30 %, more preferably 10 % to 25 % of the total circumference of the piston ring on both sides of the ring end gap (22).

10. The piston ring (2) according to one of claims 1 to 5,
wherein the axial dimension of the contact surface (14) is constant at first and then increases over the region, which extends over 5 % to 35 %, preferably 10 % to 30 %, more preferably 10 % to 25 % of the total circumference of the piston ring on both sides of the ring end gap (22).

11. The piston ring (2) according to one of the preceding claims,
wherein the axial dimension of the contact surface (14) is constant in at least one region in circumferential direction (18).

12. The piston ring according to one of the preceding claims,
wherein an angle between the pressure relief chamfer (12) and the upper edge (10) lies in the range from 93° to 160°, preferably in the range from 100 ° to 150°, more preferably in the range from 105° to 140 °.

## Revendications

1. Segment de piston (2), comprenant
un côté extérieur de bague (4),
un flanc de bague supérieur (6) et
un flanc de bague inférieur (8),
dans lequel le côté extérieur de bague (4) présente une pente de décharge de pression (12) sur un bord supérieur (10), de sorte que seule une partie inférieure du côté extérieur de la bague présente une surface de contact (14) qui forme une surface de roulement,
dans lequel une dimension axiale de la surface de contact (14) varie dans la direction circonférentielle (18),
dans lequel la dimension axiale de la surface de contact (14) présente un minimum au niveau d'un joint annulaire (22),
**caractérisé en ce que**
une distance axiale entre le bord supérieur (10) et la surface de contact (14) dans la zone d'impact est maximale et s'étend uniformément sur la circonférence (18) à une valeur minimale comprise entre 2,5% et 40% d'une hauteur de segment de piston et
que la dimension axiale de la surface de contact (14) dans des zones partielles de la circonférence est supérieure à 60% et inférieure à 100% de la hauteur de segment de piston.

2. Segment de piston (2) selon la revendication 1, dans lequel la dimension axiale de la surface de contact (14) englobe un point radialement le plus extérieur (20) de la surface de roulement.

3. Segment de piston (2) selon la revendication 1, dans lequel la dimension axiale de la surface de contact (14) s'étend jusqu'au point radialement le plus extérieur (20) de la surface de roulement.

4. Segment de piston (2) selon une des revendications précédentes, dans lequel une position axiale du point radialement le plus extérieur (20) de la surface de contact (14) varie dans la direction circonférentielle (18).

5. Segment de piston (2) selon une des revendications précédentes, dans lequel une distance axiale entre le bord supérieur (10) et la surface de contact (14) est maximale dans la zone d'impact et diminue de manière uniforme sur la circonférence (18) à une valeur minimale, qui est comprise entre 2,5% et 30%, de préférence entre 5% et 15% de la hauteur d'un segment de piston.

6. Segment de piston (2) selon une des revendications précédentes, dans lequel la dimension axiale de la surface de contact (14) présente le minimum dans une région qui s'étend sur 5% à 35%, de préférence 10% à 30%, de manière particulièrement préférée 10% à 25% de la circonférence totale du segment de piston des deux côtés du joint annulaire (22).

7. Segment de piston (2) selon la revendication 6, dans lequel la dimension axiale de la surface de contact (14) augmente dans la direction circonférentielle (18) du minimum au joint annulaire (22) et dans la direction opposée.

8. Segment de piston (2) selon la revendication 1, dans lequel la dimension axiale de la surface de contact (14) augmente à partir du joint annulaire (22) dans la direction circonférentielle (18).

9. Segment de piston (2) selon une des revendications 1 à 5, dans lequel la dimension axiale de la surface de contact (14) sur la zone qui s'étend sur 5% à 35%, de préférence 10% à 30%, de manière particulièrement préférée 10% à 25% de la circonférence totale du segment de piston des deux côtés du joint annulaire (22) est constante des deux côtés du joint annulaire (22).

10. Segment de piston (2) selon une des revendications 1 à 5, dans lequel la dimension axiale de la surface de contact (14) sur la zone qui s'étend sur 5% à 35%, de préférence 10% à 30%, de manière particulièrement préférée 10 % à 25 % de la circonférence totale du segment de piston, des deux côtés du joint de segment (22) est d'abord constante et augmente ensuite.

11. Segment de piston (2) selon une des revendications précédentes, dans lequel la dimension axiale de la surface de contact (14) dans au moins une région est constante dans la direction circonférentielle (18).

12. Segment de piston (2) selon une des revendications précédentes, dans lequel l'angle entre la pente de décharge de pression (12) et le bord supérieur (10) est compris entre 93° et 160°, de préférence entre 100° et 150°, de manière particulièrement préférée est compris entre 105° et 140°.
